# EUROPÄISCHE PATENTANMELDUNG

(11) **EP 4 825 914 A1**
(43) Veröffentlichungstag der Anmeldung: **21.10.2026**
(21) Anmeldenummer: 26172986.7
(22) Anmeldetag: 17.04.2026
(51) Int. Cl.: C08L 19/00, C08L 75/04, E01C 9/00, E01C 13/04

(54) **MISCHUNG, INSBESONDERE ZUR HERSTELLUNG VON FALLSCHUTZMATTEN UND RASENGITTERN, ALS AUCH EIN FLACHBAUENDER GEGENSTAND, HERGESTELLT MIT DER MISCHUNG**

(30) Priorität: 17.04.2025 DE 102025115174
(71) Anmelder: Conradi + Kaiser GmbH, 56271 Kleinmaischeid (DE)
(72) Erfinder: Maxein, Georg, 56566 Neuwied (DE)
(74) Vertreter: Geskes, Christoph

(57) **Zusammenfassung**

Zur Lösung der Aufgabe, Mischungen und daraus hergestellte flachbauende Gegenstände, insbesondere Fallschutzmatten oder Rasengitter, die mit einem geringen Materialeinsetz herstellbar sind, zur Verfügung zu stellen, wird eine Mischung vorgeschlagen umfassend ein körniges Butyl-Granulat, umfassend Butylkautschuk und/oder Halobutylkautschuk, in einer Menge in einem Bereich von 40 Gew.-% bis 97 Gew.-% und mindestens ein Bindemittel in einer Menge in einem Bereich von 2,5 Gew.-% bis 11 Gew.-%, wobei die Mengenangaben bezogen sind auf die Gesamtmenge der Mischung.

## Beschreibung

Die vorliegende Erfindung betrifft eine Mischung, insbesondere zur Herstellung von Fallschutzmatten und Rasengittern, deren Verwendung als auch einen flachbauenden Gegenstand, hergestellt mit der erfindungsgemäßen Mischung.

Fallschutzmatten werden auf Spielplätzen, aber auch im Zusammenhang mit sonstigen Sporteinrichtungen wie Parkouren oder ähnlichem eingesetzt. Zudem sind diese anders als Oberflächen mit Sand oder Holzschnitzeln für Menschen mit Gehbehinderungen, insbesondere Rollstuhlfahrer, nutzbar. Auch Rasengitter werden in diesem Bereich eingesetzt, aber auch bei sonstigen beanspruchten Untergründen, insbesondere auch in Verbindung mit der Vermittlung eines Fallschutzes für betretende Personen. Die vorstehend benannten Anwendungsbereiche sind lediglich beispielhaft zu verstehen und sind um weitere Anwendungsbereiche erweitert, die für den Fachmann üblich sind.

Um einen Fallschutz zu vermitteln, werden insbesondere Fallschutzmatten oder Rasengitter auf Grundlage von Gummigranulaten hergestellt. Im Stand der Technik wird hierzu üblicherweise ein Styrol-Butadien-Kautschuk (SBR = Styrol-Butadien-Rubber) in Form eines Granulates eingesetzt. Dieses Granulat wird, wie beispielsweise aus der DE 10 2021 127 257 A1 bekannt, aus Altreifen hergestellt werden und weist daher neben SBR in der Regel noch weitere Elastomere, aber auch Additive wie Füllstoffe, Antioxidationsmittel, Weichmacher, und weiteres auf. Hierbei wird in einem ersten Schritt Gummigranulat mit einem Bindemittel vermischt, so dass die Granulat-Teilchen von dem Bindemittel benetzt werden. Die das Gummigranulat und das Bindemittel enthaltene Mischung wird in eine Form gegeben und zum schnellen Aushärten des Bindemittels erhitzt.

Nachteilig an diesen aus dem Stand der Technik bekannten Mischungen zur Herstellung von Fallschutzmatten oder ähnlichem ist jedoch, dass verhältnismäßig viel Material eingesetzt werden muss, da normgerechte hinreichende Dämpfungseigenschaften vermittelt werden müssen. Hierdurch steigen die Herstellungskosten dieser aus dem Stand der Technik bekannten Fallschutzmatten oder ähnlichem erheblich.

Aufgabe der vorliegenden Erfindung ist es, Mischungen und daraus hergestellte flachbauende Gegenstände, insbesondere Fallschutzmatten oder Rasengitter, die mit einem geringen Materialeinsetz herstellbar sind, zur Verfügung zu stellen.

Diese Aufgabe wird erfindungsgemäß gelöst durch eine Mischung, insbesondere zur Herstellung von Fallschutzmatten und Rasengittern, umfassend ein körniges Butyl-Granulat, umfassend Butylkautschuk und/oder Halobutylkautschuk, in einer Menge in einem Bereich von etwa 40 Gew.-% bis etwa 97 Gew.-%, weiterhin umfassend mindestens ein Bindemittel, bevorzugt auf Polyurethanbasis, in einer Menge in einem Bereich von etwa 2,5 Gew.-% bis etwa 11 Gew.-%, wobei die vorstehenden Mengenangaben jeweils bezogen sind auf die Gesamtmenge der Mischung. Aus den erfindungsgemäßen Mischungen können beispielsweise flachbauende Gegenstände, wie beispielsweise Fallschutzmatten oder Rasengitter, hergestellt werden, welche verglichen mit den aus dem Stand der Technik bekannten Produkten verbesserte Dämpfungseigenschaften aufweisen, so dass die entsprechenden Produkte mit einem geringeren Materialeinsatz, also unter Reduktion der eingesetzten Menge der Mischung, herstellbar sind. Hierdurch weisen die mittels der erfindungsgemäßen Mischung hergestellten flachbauenden Gegenstände ein geringes Gewicht bei gleichbleibender Dämpfungseigenschaft, verglichen mit den aus dem Stand der Technik bekannten Produkten, auf. Alternativ können auch unter einem gleichbleibenden Einsatz an Menge der Mischung flachbauende Gegenstände hergestellt werden, die dann verbesserte Dämpfungseigenschaften und ein höheres Gewicht aufweisen, so dass Vandalismus vorgebeugt wird.

Der Begriff "Butyl-Granulat" umfasst solche körnigen Granulate, welche ausschließlich aus Butylkautschuk und/oder Halobutylkautschuk bestehen, umfasst aber auch körnige Granulate, die neben den vorstehend genannten Materialien Füllstoffe, Bindemittel, Weichmacher, Antioxidationsmittel und sonstige Additive enthalten. Besonders bevorzugt ist das Butyl-Granulat im Sinne der vorliegenden Erfindung hergestellt aus industriellen Abfällen. Dies können insbesondere Abfälle aus der Medizintechnik sein, die beim Stanzen von Stopfen, Verschlüssen oder sonstigen medizintechnischen Gegenständen anfallen, oder aber Abfälle aus der Produktion von in der Chemie verwendeten Schläuchen oder von in der Industrie verwendeten Dichtungen. Üblicherweise weisen recycelte Butyl-Granulate im Sinne der vorliegenden Erfindungen einen Anteil von Butylkautschuk oder Halobutylkautschuk in einem Bereich in einer Menge von etwa 20 Gew.-% bis etwa 65 Gew.-%, bevorzugt von etwa 30 Gew.-% bis etwa 55 Gew.-%, bezogen auf die Gesamtmenge des körnigen Butyl-Granulates, auf. Butyl-Granulat aus industriellen Abfällen weist in der Regel mindestens ein Bindemittel und gegebenenfalls weitere Materialien auf. Derartiges, aus Abfällen gewonnenes Butyl-Granulat ist daher in der erfindungsgemäßen Mischung als mit dem mindestens einen Bindemittel -beschichtet anzusprechen, wobei im Granulat selbst auch mindestens ein Bindemittel vorliegen kann beziehungsweise in der Regel auch vorliegt. Die erfindungsgemäße Mischung weist dann Butyl-Granulat aus Abfällen, das mindestens ein Bindemittel umfasst, auf, wobei des erfindungsgemäß eingesetzte Bindemittel--das Butyl-Granulat beschichtet. Der Begriff "körnig" im Sinne der vorliegenden Erfindung ist dahingehend zu verstehen, dass Butyl-Granulat nicht als Mehl eingesetzt ist, sondern zumindest eine gewisse Korngröße aufweist. Bevorzugt weist das Butyl-Granulat eine mittlere Korngrößenverteilung gemäß DIN EN 53477 in einem Bereich von etwa 0,3 mm bis etwa 4 mm, weiter bevorzugt in einem Bereich von etwa 0,4 mm bis etwa 3,5 mm, und noch weiter bevorzugt in einem Bereich von etwa 1,3 mm bis etwa 3,2 mm, auf. Insbesondere ist es unter dem Begriff "körniges Butyl-Granulat" keine mehlartige Substanz zu verstehen, welche eine mittlere Korngröße kleiner gleich 0,1 mm, weiter bevorzugt kleiner gleich 0,15 mm, aufweist. Unter den Begriff "körnig" fallen insbesondere auch keine faserförmigen Materialien.

Unter Halobutylkautschuk wird im Sinne der vorliegenden Erfindung Chlorbutylkautschuk und/oder Brombutylkautschuk verstanden. Besonders bevorzugt umfasst die erfindungsgemäße Mischung Chlorbutylkautschuk und/oder Brombutylkautschuk, weiter bevorzugt sowohl Chlorbutylkautschuk als auch Brombutylkautschuk. In einer weiter bevorzugten Ausführungsform umfasst die erfindungsgemäße Mischung Butylkautschuk, Chlorbutylkautschuk und Brombutylkautschuk. Diese sind allein oder in den vorgenannten Mischungen in dem körnigen Butyl-Granulat, welches zur Herstellung der erfindungsgemäßen Mischung eingesetzt ist, bevorzugt in einer Menge in einem Bereich von etwa 20 Gew.-% bis etwa 65 Gew.-%, weiter bevorzugt in einer Menge von etwa 30 Gew.-% bis etwa 55 Gew.-%, jeweils bezogen auf die Gesamtmenge des körnigen Butyl-Granulates, von diesem umfasst.

In einer bevorzugten Ausführungsform umfasst die erfindungsgemäße Mischung Styrol-Butadien-Kautschuk (SBR = Styrol-Butadien-Rubber). Vorzugsweise ist SBR aus recycelten Schuhen eingesetzt. SBR ist ein synthetischer Kautschuk, der aufgrund seiner exzellenten mechanischen Eigenschaften, wie hohe Abriebfestigkeit, Flexibilität und Widerstandsfähigkeit gegen Witterungseinflüsse, besonders geeignet ist. Der Einsatz von SBR in Verbindung mit körnigem Butyl-Granulat trägt zur Verbesserung und zur genauen und anwendungsbezogenen Einstellbarkeit des gewünschten Produkteigenschaften bei. SBR wird, vorzugsweise mindestens teilweise geschäumt, bevorzugt eingesetzt in einer Menge in einem Bereich von etwa 7 Gew.-% bis etwa 55 Gew.-%, weiter bevorzugt in einer Menge von etwa 8 Gew.-% bis etwa 52 Gew.-%, noch weiter bevorzugt in einem Bereich von etwa 8,5 Gew.-% bis etwa 50 Gew.-%, jeweils bezogen auf die Gesamtmenge der erfindungsgemäßen Mischung.

In einer bevorzugten Ausführungsform umfasst die erfindungsgemäße Mischung EthylenVinylacetat (EVA). Vorzugsweise ist EVA aus recycelten Schuhen eingesetzt. EVA zeichnet sich durch eine ausgeprägte Elastizität, hohe Beständigkeit gegenüber UV-Strahlung und eine gute chemische Beständigkeit aus. Der Einsatz von SBR in Verbindung mit körnigem Butyl-Granulat trägt zur Verbesserung und zur genauen und anwendungsbezogenen Einstellbarkeit des gewünschten Produkteigenschaften bei. SBR wird, vorzugsweise mindestens teilweise geschäumt, bevorzugt eingesetzt in einer Menge in einem Bereich von etwa 7 Gew.-% bis etwa 55 Gew.-%, weiter bevorzugt in einer Menge von etwa 8 Gew.-% bis etwa 52 Gew.-%, noch weiter bevorzugt in einem Bereich von etwa 8,5 Gew.-% bis etwa 50 Gew.-%, jeweils bezogen auf die Gesamtmenge der erfindungsgemäßen Mischung.

In einer weiter bevorzugten Ausführungsform umfasst die erfindungsgemäße Mischung weiterhin mindestens ein Granulat auf Polyurethanbasis in einer Menge in einem Bereich von etwa 7 Gew.-% bis etwa 55 Gew.-%, weiter bevorzugt in einer Menge von etwa 8 Gew.-% bis etwa 52 Gew.-%, noch weiter bevorzugt in einem Bereich von etwa 8,5 Gew.-% bis etwa 50 Gew.-%, wobei die Menge jeweils bezogen ist auf die Gesamtmenge der erfindungsgenmäßen Mischung. Die Beimischung von mindestens einem Granulat auf Polyurethanbasis ermöglicht es vorteilhafterweise, Produkte, hergestellt aus der erfindungsgemäßen Mischung, mit spezifischen Dämpfungseigenschaften herzustellen und insbesondere auch, die Dämpfungseigenschaften einzustellen. Durch eine Zugabe von Granulaten auf Polyurethan-basis zu der erfindungsgemäßen Mischung ist vorteilhafterweise eine gezielte Einstellung der Rückprallelastizität eines Produkts einstellbar. Dies Rückprallelastizität ist bei flachbauenden Gegenständen, insbesondere bei Fallschutzmatten und Rasengittern, von entscheidender Bedeutung. Je nach gewünschtem Einsatzort und Einsatzart/Verwendungszweck kann durch die Zugabe von Polyurethan-Granulat die physikalischen Produkteigenschaften des flachbauenden Gegenstandes insbesondere von Fallschutzmatten und Rasengittern, eingestellt werden. Vorzugsweise wird zumindest teilweise ein geschäumtes Granulat auf Polyurethan-basis eingesetzt. Über die Art und den Anteil an geschäumten Granulat auf Polyurethanbasis werden die Dämpfungseigenschaften beeinflusst. Eine feine Schäumung des Granulates auf Polyurethanbasis, vorzugsweise eines geschlossenporig geschäumten Granulates auf Polyurethanbasis, verbessert vorzugsweise die Dämpfungseigenschaften. Granulate auf Polyurethanbasis im Sinne der vorliegenden Erfindung sind vorteilhafterweise solche, welche aus industriellen Abfällen gewonnen werden. Mithin handelt es sich bevorzugt wie bei den körnigen Butyl-Granulaten um Rezyklate. Die eingesetzten Granulate auf Polyurethanbasis weisen dabei vorteilhafterweise eine mittlere Korngröße auf, welche im Wesentlichen der mittleren Korngröße des körnigen Butyl-Granulates entspricht. Bevorzugt weist das Granulat auf Polyurethanbasis eine mittlere Korngrößenverteilung gemäß DIN EN 53477 in einem Bereich von etwa 0,3 mm bis etwa 4 mm, weiter bevorzugt in einem Bereich von etwa 0,4 mm bis etwa 3,5 mm, und noch weiter bevorzugt einem Bereich von etwa 1,3 mm bis etwa 3,2 mm, auf.

Bevorzugt umfasst die erfindungsgemäße Mischung ein körniges Butyl-Granulat, umfassend Butylkautschuk und/oder Halobutylkautschuk, in einer Menge in einem Bereich von etwa 45 Gew.-% bis etwa 95 Gew.-%, weiter bevorzugt in einem Bereich von etwa 48 Gew.-% bis etwa 94 Gew.-%, jeweils bezogen auf die Gesamtmenge der erfindungsgemäßen Mischung. Bevorzugt umfasst die erfindungsgemäße Mischung das mindestens eine Bindemittel auf Polyurethanbasis in einer Menge in einem Bereich von etwa 3 Gew.-% bis etwa 8 Gew.-%. Dabei ist zu berücksichtigen, dass körniges Butyl-Granulat, welches eine niedrige mittlere Korngrößenverteilung aufweist, eine größere Menge an Bindemittel benötigt als eine Mischung, welche ein körniges Butyl-Granulat mit einer höheren mittleren Korngrößenverteilung aufweist. Vorteilhaft im Vergleich zum Stand der Technik ist insbesondere, dass unter vergleichbaren Bedingungen, das heißt ähnlichen mittleren Korngrößenverteilungen, bei der erfindungsgemäßen Mischung weniger Bindemittel eingesetzt werden muss als bei den aus dem Stand Technik bekannten Mischungen zur Herstellung von beispielsweise Rasengittern und Fallschutzmatten. Üblicherweise ist eine Minderung des notwendigerweise einzusetzenden mindestens eines Bindemittels bei der erfindungsgemäßen Mischung in einem Bereich von etwa 10 % bis etwa 20 % im Vergleich zu den aus dem Stand der Technik bekannten Mischungen festzustellen. Zudem wird zur Erreichung einer hinreichenden Fallschutzwirkung bei den aus dem Stand der Technik bekannten Mischungen faserförmiger Naturkautschuk (auch NR=natural rubber genannt) zugefügt. Oft wird im Stand der Technik auch mehlartiges SBR zur Erzeugung einer geschlosseneren Oberfläche zugefügt, wobei mehlartiges SBR eine mittlere Korngrößenverteilung von ≤ 1,0 mm aufweist. Insbesondere NR in Faserform ist im Vergleich zu einem SBR in Granulatform teurer, so dass aufgrund des Verzichtes von Fasern oder Mehlen in den erfindungsgemäßen Mischungen letztendlich erfindungsgemäße flachbauende Gegenstände günstiger hergestellt werden können. Denn das in der erfindungsgemäßen Mischung eingesetzte mindestens eine körnige Butyl-Granulat, umfassend Butlykautschuk und/oder Halobutylkautschuk, benötigt für seine Verarbeitung nicht den Einsatz von teuren Fasern. Daher umfasst bevorzugt die erfindungsgemäße Mischung keinen Naturkautschuk, Butylkautschuk und/oder Halobutylkautschuk in Form von Fasern. Weiter bevorzugt ist die erfindungsgemäße Mischung frei von polyzyklischen aromatischen Kohlenwasserstoffen.

Bevorzugt umfasst das erfindungsgemäße Granulat auf Polyurethan-Basis neben Polyurethan Additive wie Antioxidationsmittel, Weichmacher, Füllstoffe und ähnliches. Das Granulat auf Polyurethan-Basis umfasst Polyurethan bevorzugt in einer Menge in einem Bereich von etwa 50 Gew.-% bis etwa 95 Gew.-%, weiter bevorzugt in einer Menge in einem Bereich von etwa 55 Gew.-% bis etwa 90 Gew-%, jeweils bezogen auf die Gesamtmenge des Granulates auf Polyurethan-Basis.

In einer weiter bevorzugten Ausführungsform liegt das Verhältnis des Butyl-Granulates zu dem Granulat auf Polyurethanbasis in der Mischung in einem Bereich von etwa 9:1 bis etwa 1:1,2, weiter bevorzugt in einem Bereich von etwa 8,8:1 bis etwa 1:1,1. Je höher der Anteil an Granulat auf Polyurethanbasis, umso geringer sind die Dämpfungswirkungen der mit der erfindungsgemäßen Mischung hergestellten Produkte. In den Grenzen der genannten Bereiche bzw. Verhältnisangaben lassen sich aber stets mittels der erfindungsgemäßen Mischung Produkte, insbesondere flachbauende Gegenstände wie Fallschutzmatten und Rasengitter, herstellen, die hinreichende Dämpfungseigenschaften gemäß den dafür geltenden Normen, insbesondere der DIN EN 1176 und DIN EN 1177, aufweisen.

Weiter bevorzugt ist das mindestens eine Bindemittel hergestellt aus einem Polyurethan-Präpolymer auf MDI-Polyether-Polyol-Basis und/oder auf aliphatischer HMDI-Polyether-Polyol-Basis. Auch können Bindemittel hergestellt aus einem Polyurethan-Präpolymer auf MDI-Polyester-Polyol-Basis eingesetzt werden. Besonders bevorzugt werden im Sinne der vorliegenden Erfindung in der erfindungsgemäßen Mischung Bindemittel eingesetzt aus einem Polyurethan-Präpolymer mit einer aliphatischen HMDI-Polyether-Polyol-Basis. Vorteilhafterweise ist das mindestens eine Bindemittel UV-stabil.

In einer weiter bevorzugten Ausführungsform umfasst die erfindungsgemäße Mischung mindestens ein Farbpigment in einer Menge in einem Bereich von etwa 0,4 Gew.-% bis etwa 2,8 Gew.-%, weiter bevorzugt einer Menge in einem Bereich von etwa 1 Gew.-% bis etwa 2 Gew.-%, jeweils bezogen auf die Gesamtmenge der Mischung. Mittels mindestens eines Farbpigmentes kann den aus der erfindungsgemäßen Mischung herstellbaren Produkten, insbesondere flachbauenden Gegenständen, eine Färbung mitgegeben werden, so dass je nach Anforderungen die hergestellten Produkte, insbesondere flachbauende Gegenstände, eine spezifische, vorgegebene Färbung aufweisen. Auch lassen sich auf diese Art und Weise beispielsweise Flächen mit farblichen Mustern oder ähnlichem aus flachbauenden Gegenständen erzeugen, die mittels der erfindungsgemäßen Mischung hergestellt sind. Bevorzugt sind metallische Farbpigmente oder solche auf Basis von Metalloxiden, bevorzugt in Plättchenform, beispielsweise Aluminiumplättchen zur Erzeugung einer silbergrauen Färbung. Aber auch natürliche und sonstige Farbpigmente können eingesetzt werden. Kein Pigment ist notwendig, wenn ein dunkler, schwarzer Eindruck der hergestellten Produkte erzeugt werden soll.

Besonders vorteilhaft an der erfindungsgemäßen Mischung ist, dass mittels dieser Produkte wie beispielsweise flachbauende Gegenstände, insbesondere Fallschutzmatten und Rasengitter, herstellbar sind, die im Vergleich zu dem Stand der Technik ein geringeres Gewicht bei gleichartigen Dämpfungseigenschaften aufweisen. Umgekehrt betrachtet kann es je nach Anwendungsfall auch von Vorteil sein, wenn bei verbesserten Dämpfungseigenschaften der mittels der erfindungsgemäßen Mischung hergestellten flachbauenden Gegenstände bei einem gleichbleibenden Einsatz an Menge der Mischung wie bei aus dem Stand der Technik bekannten Gegenständen ein höheres Gewicht aufweisen, wodurch Vandalismus vorgebeugt wird.

Die vorliegende Erfindung betrifft auch eine Verwendung einer erfindungsgemäßen Mischung wie vorstehend beschrieben zur Herstellung flachbauender Gegenstände, insbesondere in Plattenform, Bahnform, Rollenform oder Mattenform, insbesondere von Fallschutzmatten und Rasengittern. Je nach Anwendungsfall können dabei vorteilhafterweise solche flachbauenden Gegenstände zur Verfügung gestellt werden, die im Vergleich zum Stand der Technik identischen oder ähnlichen Dämpfungseigenschaften ein geringeres Gericht aufweisen, oder welche mit verbesserten Dämpfungseigenschaften bei einem gleichbleibenden Einsatz an Menge der Mischung ein höheres Gewicht aufweisen, um Vandalismus vorzubeugen.

Die vorliegende Erfindung betrifft weiterhin einen flachbauenden Gegenstand, hergestellt mit einer Mischung wie vorstehend beschrieben unter Anwendung von Druck, insbesondere mit einer Kompressionsrate in einem Bereich von etwa 1,1 bis etwa 2,5, weiter bevorzugt in einem Bereich von etwa 1,3 bis etwa 2. Zusätzlich zur Anwendung von Druck kann auch Wärme eingesetzt werden. Dabei kann die Mischung zunächst unter Druck komprimiert und anschließend erwärmt werden. Es ist jedoch auch möglich, eine Erwärmung und Anwendung von Druck auf die Mischung zur Herstellung von flachbauenden Gegenständen gleichzeitig vorzunehmen. Besonders bevorzugt ist das in der erfindungsgemäßen Mischung eingesetzte mindestens eine Bindemittel auf Polyurethanbasis ein solches, welches mit Feuchtigkeit reagiert. Insbesondere dann ist es nicht notwendig, zusätzlich zur Anwendung von Druck auch Wärme anzuwenden. Wesentlich für eine Bindung des körnigen Butyl-Granulates an das Bindemittel auf Polyurethanbasis ist, dass eine hinreichende physikalische Adhäsion zur Verfügung gestellt ist. Die Kompressionsrate im Sinne der vorliegenden Erfindung gibt an, inwiefern aus einem bestimmten Schüttvolumen, beispielsweise zwei Litern, ein Gegenstand mit einem Volumen von einem Liter hergestellt werden kann. In diesem Fall beträgt die Kompressionsrate 2,0. Liegt beispielsweise ein in einer Form zur Herstellung eines flachbauenden Gegenstandes eingefülltes Schüttvolumen von 1,6 Litern vor, und wird dieses auf einen Liter zusammengepresst, liegt eine Kompressionsrate von 1,6 vor.

Bevorzugt weist der flachbauende Gegenstand eine Stoßdämpfung, ausgedrückt als kritische Fallhöhe (CFH = Critical Fall Height), in einem Bereich von etwa 1550 mm bis etwa 2000 mm, bevorzugt in einem Bereich von etwa 1650 mm bis etwa 1900 mm, gemäß DIN EN 1177:2018, bezogen auf eine Stärke des flachbauenden Gegenstandes von 45 mm, als massiver Körper mit einer Grundfläche von 50 cm mal 50 cm, auf. Ein massiver Körper im Sinne der vorliegenden Erfindung ist ein Körper, der aufgrund des eingesetzten Materials und des Herstellungsverfahrens zwar Hohlräume, insbesondere Poren, aufweisen kann, aber nicht bewusst eingeformte Blasen oder ähnliche, bewusst bei der Herstellung angeordnete Hohlräume aufweist. Ein massiver Körper kann aber beispielsweise auf seinen Außenflächen Ausnehmungen aufweisen, beispielsweise in Form von Drainagen in einer Fallschutzmatte, oder aber auch zwei- oder mehrschichtig aufgebaut sein. In einer jeden Schicht, auch bei einer nur einschichtigen Ausbildung, besteht ein massiver Körper vollständig aus demselben Material. Insbesondere ist im Sinne der vorliegenden Erfindung eine Fallschutzmatte, die auf einer Außenfläche eine Drainage aufweisen kann, ein massiver Körper, oder ein Rasengitter. Vorteilhafterweise ist es damit mit den aus der erfindungsgemäßen Mischung hergestellten erfindungsgemäßen flachbauenden Gegenständen möglich, kritische Fallhöhen zu erreichen, welche etwa 10 % bis etwa 20 % höher liegen als solche, welche flachbauende Gegenstände aufweisen, die identisch ausgebildet sind und nach dem Stand der Technik aus Mischungen auf Grundlage von SBR (beispielsweise in Form von Altreifen-Granulat) hergestellt wurden.

Weiter bevorzugt ist der erfindungsgemäße flachbauende Gegenstand zweischichtig aufgebaut mit einer Basisschicht auf Grundlage der erfindungsgemäßen Mischung und zusätzlich einer Deckschicht, hergestellt aus einer Mischung umfassend mindestens ein EPDM, das auch ein EPDM-Granulat aus recycelten Materialien sein kann. Die Deckschicht weist üblicherweise eine Stärke in einem Bereich von etwa 7 mm bis etwa 15 mm, weiter bevorzugt in einem Bereich von etwa 8 mm bis etwa 12 mm, auf. Die Basisschicht weist üblicherweise eine Dicke in einem Bereich von etwa 15 mm bis etwa 93 mm auf. Bevorzugt ist ein EPDM-Granulat eingesetzt, welches etwa 15 Gew.-% bis etwa 60 Gew.-%, bevorzugt etwa 20 Gew.-% bis etwa 50 Gew.-%, EPDM, jeweils bezogen auf die Gesamtmenge des EPDM-Granulates, aufweist. Des Weiteren umfasst das mindestens ein EPDM-Granulat mindestens ein Bindemittel, bevorzugt in einer Menge in einem Bereich von etwa 3 Gew.-% bis etwa 10 Gew.-%, weiter bevorzugt in einem Bereich von 4 Gew.-% bis etwa 7 Gew.-%, jeweils bezogen auf die Gesamtmenge des EPDM-Granulates. Durch den zweischichtigen Aufbau können flachbauende Gegenstände zur Verfügung gestellt werden, welche eine sehr gleichmäßige und taktil angenehme Oberfläche aufweisen, gleichzeitig aber Dämpfungseigenschaften aufweisen, die die kritische Fallhöhe (CFH) des flachbauenden Gegenstandes nicht oder nicht Wesentlich beeinträchtigen. Besonders bevorzugt ist der flachbauende Gegenstand frei von polyzyklischen aromatischen Kohlenwasserstoffen. Bevorzugt ist der flachbauende Gegenstand als Fallschutzmatte oder als Rasengitter ausgebildet.

Wird im Rahmen der Begriff "etwa" in Zusammenhang mit Werten oder Wertebereichen oder Verhältnissen verwendet, so ist darunter ein Toleranzbereich zu verstehen, den der Fachmann auf diesem Gebiet für üblich erachtet, insbesondere ist ein Toleranzbereich von +/- 20 %, bevorzugt +/- 10 %, weiter bevorzugt +/- 5 %, vorgesehen. Soweit verschiedene Wertebereiche oder sonstige Bereiche, beispielsweise weiter bevorzugte Wertebereiche, in der vorliegenden Erfindung angegeben sind, sind die Untergrenzen und Obergrenzen der verschiedenen Wertebereiche miteinander kombinierbar. Soweit Mengenangaben in Gew.-% betroffen sind, bedeutet der in Bezug auf eine Obergrenze verwendete Begriff "etwa", dass nicht mehr als insgesamt 100 Gew.-% beansprucht sein können.

Diese und weitere Vorteile der vorliegenden Erfindung werden anhand der nachfolgenden Beispiele nähergehend erläutert.

Gemäß der nachfolgenden Tabelle 1 wurden Zusammensetzungen für Mischungen 1 bis 15 hergestellt. Dabei betrifft Mischung 1 eine solche mit einem SBR nach dem Stand der Technik. Die Mischungen 2 und 3 betreffen Mischungen für Deckschichten flachbauender Gegenstände bei einer zweischichtigen Ausbildung derselben, hergestellt aus einem EPDM-Granulat. Die Mischungen 4 bis 15 sind erfindungsgemäße Mischungen, aus denen flachbauende Gegenstände wie Fallschutzmatten oder Rasengitter herstellbar sind. Dabei wurden körnige Butyl-Granulate mit einer unterschiedlichen mittleren Korngröße (in der Tabelle 1 in der Kopfzeile in Klammern angegeben und gemäß DIN EN 53 477 ermittelt) eingesetzt. Dabei ist erkennbar, dass, je feiner die Korngröße des eingesetzten körnigen Butyl-Granulates ist, umso mehr Bindemittel zugesetzt werden muss. Die Mischungen 10 bis 15 sind Mischungen aus einem körnigen Butyl-Granulat und einem Granulat auf Polyurethanbasis (PU-Granulat) auf. Diese Mischungen zeigen, dass unterschiedlich hohe Mengen an PU-Granulat der erfindungsgemäßen Mischung zusetzbar sind. Zudem weisen die Mischungen 4, 6, 8, 10, 12 und 14 zusätzlich ein Farbpigment auf, so dass ein roter oder rötlicher Gegenstand aus den jeweiligen Mischungen herstellbar ist.

**Tabelle 1: Zusammensetzungen**

| | 1 (2,355 mm) Stand der Technik | 2 EPDM Deckschicht | 3 EPDM Deckschicht | 4 (2,420 mm) gefärbt | 5 (2,420 mm) | 6 (3,677 mm) gefärbt | 7 (3,677 mm) | 8 (0,780 mm) gefärbt | 9 (0,780 mm) | 10 (2,420 mm) Mit PU-Granulat gefärbt | 11 (2,420 mm) Mit PU-Granulat | 12 (3,677 mm) Mit PU-Granulat gefärbt | 13 (3,677 mm) Mit PU-Granulat | 14 (0,780 mm) Mit PU-Granulat gefärbt | 15 (0,780 mm) Mit PU-Granulat |
|---|---|---|---|---|---|---|---|---|---|---|---|---|---|---|---|
| SBR Granulat | 82,9 | | | | | | | | | | | | | | |
| SBR Faser/Rauhmehl | 10 | | | | | | | | | | | | | | |
| Butyl-Granulat | | | | 93,7 | 95,2 | 95,5 | 97,0 | 89,0 | 90,5 | 84,1 | 85,5 | 70,0 | 71,0 | 43 | 43,7 |
| PU-Granulat | | | | | | | | | | 9,4 | 9,5 | 22,5 | 23,0 | 48,5 | 49,3 |
| Bindemittel SBR-/Butyl-Granulat | 5,6 | | | 4,8 | 4,8 | 3,0 | 3,0 | 9,5 | 9,5 | 5,0 | 5,0 | 6,0 | 6,0 | 10,5 | 10,5 |
| Pigment (rot) | 1,5 | | | 1,5 | | 1,5 | | 1,5 | | 1,5 | | 1,5 | | 1,5 | |
| EPDM-Granulat | | 93,4 | 94,2 | | | | | | | | | | | | |
| Bindemittel EPDM | | 6,6 | | | | | | | | | | | | | |
| Bindemittel EPDM (UV-stabil) | | | 5,8 | | | | | | | | | | | | |

Aus den vorstehenden in Tabelle 1 genannten Mischungen wurden unter Anwendung von Druck bei einer Temperatur von 100°C und einer Kompressionsrate von 1,6, wobei der Druck für 120 Sekunden aufrecht erhalten wurde, flachbauende Gegenstände in Form von Fallschutzmatten (FSM) und Rasengittern (RSG) in Maßen von 50 cm mal 50 cm und unterschiedlichen Dicken als massive Vollkörper hergestellt. Die Rasengitter weisen dabei quadratische Öffnungen von jeweils 5 cm mal 5 cm und diese trennenden Stege mit einer Breite von 2,2 cm auf. Dabei wurden Fallschutzmatten in Dicken von 30 mm, 45 mm, 65 mm und 80 mm hergestellt, Rasengitter in Dicken von 45 mm und 65 mm. Zudem wurden die Mischungen 1, 4 und 10 mit jeweils einer EPDM-Deckschicht hergestellt, indem zunächst die Form zur Herstellung der Fallschutzmatte oder des Rasengitters gefüllt wurde mit den Mischungen 1, 4 und 10 derart, dass auf dieser noch eine Menge an Mischungen 2 als Deckschicht eingefüllt wird, so dass nach Anwendung von Druck mit einer Kompressionsrate von 1,6 eine Deckschicht aus der Mischung 2 in dem Rasengitter oder der Fallschutzmatte erhalten wird, welche eine Stärke von 10 mm aufweist. Der nachfolgend wiedergegebenen Tabelle 2 sind die für die entsprechend hergestellten flachbauenden Gegenstände ermittelten kritischen Fallhöhen (CFH), ermitteltet in Einklang mit der Norm DIN EN 1777:2018, wobei die Rasengitter in der gleichen Art und Weise getestet wurden wie die Fallschutzmatten, wiedergegeben.

**Tabelle 2: ermittelte Werte für die kritische Fallhöhe (CFH) in mm**

| | 1 | 1 mit 2 (10mm) | 4 | 10 | 4 mit 2 (10mm) | 10 mit 2 (10mm) |
|---|---|---|---|---|---|---|
| FSM 30 mm | 1000 | 1000 | 1200 | 1100 | 1150 | 1050 |
| FSM 45 mm | 1500 | 1500 | 1800 | 1700 | 1750 | 1650 |
| FSM 65 mm | 2000 | 2000 | 2300 | 2200 | 2200 | 2100 |
| FSM 80 mm | 2400 | 2400 | 2700 | 2600 | 2650 | 2500 |
| RSG 45 mm | 1500 | 1500 | 1800 | 1700 | 1750 | 1650 |
| RSG 65 mm | 2100 | 2100 | 2300 | 2200 | 2200 | 2150 |

Im Vergleich zu den aus der Mischung 1 hergestellten Fallschutzmatten und Rasengittern, sowohl mit Deckschicht auf EPDM-Basis oder ohne eine solche, mit den erfindungsgemäßen flachbauenden Gegenständen zeigt sich, dass letztere einen um mindestens 10 % erhöhten Wert für die kritische Fallhöhe (CFH), beispielsweise bei einer Fallschutzmatte von 45 mm, aufweisen. Dementsprechend sind mit den erfindungsgemäßen Mischungen flachbauende Gegenstände für Fallschutzmatten und Rasengitter erzeugbar, welche zur Erzielung einer gleichartigen Dämpfung wie die aus dem Stand der Technik bekannten flachbauenden Gegenstände mit einer geringeren Höhe ausgebildet werden können. So kann beispielsweise anstatt einer Fallschutzmatte mit einer Höhe mit 30 mm gemäß dem Stand der Technik nunmehr eine Fallschutzmatte mit einer Höhe von 27 mm zur Verfügung gestellt werden bei im Wesentlichen gleichbleibenden Dämpfungseigenschaften beziehungsweise im Wesentlichen gleicher kritischer Fallhöhe (CFH). Oder aber es kann vorgesehen sein, aus den erfindungsgemäßen Mischungen erfindungsgemäße flachbauende Gegenstände wie Fallschutzmatten und Rasengitter herzustellen unter gleichem Materialeinsatz in gleicher Stärke beziehungsweise Höhe wie aus dem Stand der Technik bekannt, wobei diese dann höhere Werte für die kritische Fallhöhe, aber auch ein höheres Gewicht aufweisen als die aus dem Stand der Technik bekannten flachbauenden Gegenstände, was insbesondere bei einer Stärke beziehungsweise Höhe von über 50 mm zu einer erheblichen Erhöhung des Gewichtes der flachbauenden Gegenstände führt. Dies wirkt Vandalismusneigungen Dritter entgegen. Zudem sind vorteilhafterweise die verwendungsgemäßen Mischungen als auch die mittels dieser hergestellten erfindungsgemäßen flachbauenden Gegenstände, insbesondere in Form von Fallschutzmatten und Rasengittern, frei von polyzyklischen aromatischen Kohlenwasserstoffen.

## Patentansprüche

1. Mischung, insbesondere zur Herstellung von Fallschutzmatten und Rasengittern, umfassend ein körniges Butyl-Granulat, umfassend Butylkautschuk und/oder Halobutylkautschuk, in einer Menge in einem Bereich von 40 Gew.-% bis 97 Gew.-% und mindestens ein Bindemittel in einer Menge in einem Bereich von 2,5 Gew.-% bis 11 Gew.-%, wobei die Mengenangaben bezogen sind auf die Gesamtmenge der Mischung.

2. Mischung gemäß Anspruch 1, **dadurch gekennzeichnet, dass** diese weiterhin umfasst mindestens ein Granulat auf Polyurethanbasis in einer Menge in einem Bereich von 7 Gew.-% bis 55 Gew.-%, wobei die Menge bezogen ist auf die Gesamtmenge der Mischung.

3. Mischung gemäß Anspruch 2, **dadurch gekennzeichnet, dass** das Verhältnis des Butyl-Granulates zu dem Granulat auf Polyurethanbasis in der Mischung in einem Bereich von 9 : 1 bis 1 : 1,2 liegt.

4. Mischung gemäß einem oder mehreren der vorhergehenden Ansprüche, **dadurch gekennzeichnet, dass** das mindestens eine Bindemittel hergestellt ist aus einem Polyurethan-Präpolymer auf MDI-Polyether-Polyol-Basis und/oder auf aliphatischer HMDI-Polyether-Polyol-Basis.

5. Mischung gemäß einem oder mehreren der vorhergehenden Ansprüche, **dadurch gekennzeichnet, dass** diese keinen faserförmigen Naturkautschuk, Butylkautschuk und/oder Halobutykautschuk umfasst.

6. Mischung gemäß einem oder mehreren der vorhergehenden Ansprüche, **dadurch gekennzeichnet, dass** das Butyl-Granulat Chlorbutylkautschuk und/oder Brombutylkautschuk umfasst.

7. Mischung gemäß einem oder mehreren der vorhergehenden Ansprüche, **dadurch gekennzeichnet, dass** das Butyl-Granulat hergestellt ist aus industriellen Abfallprodukten.

8. Mischung gemäß einem oder mehreren der vorhergehenden Ansprüche, **dadurch gekennzeichnet, dass** diese mindestens ein Farbpigment in einer Menge in einem Bereich von 0,2 Gew.-% bis 2,8 Gew.-% umfasst, wobei die Menge bezogen ist auf die Gesamtmenge der Mischung.

9. Mischung gemäß einem oder mehreren der vorhergehenden Ansprüche, **dadurch gekennzeichnet, dass** das Butyl-Granulat eine mittlere Korngrößenverteilung gemäß DIN EN 14243-2:2019-05 in einem Bereich von 0,3 mm bis 4 mm aufweist.

10. Verwendung einer Mischung gemäß einem oder mehreren der vorhergehenden Ansprüche zur Herstellung flachbauender Gegenstände, insbesondere in Plattenform, Bahnform, Rollenform oder Mattenform, insbesondere von Fallschutzmatten und Rasenschutzgittern.

11. Flachbauender Gegenstand, hergestellt mit einer Mischung gemäß einem oder mehreren der Ansprüche 1 bis 9 unter Anwendung Druck, insbesondere mit einer Kompressionsrate in einem Bereich von 1,5 bis 2,1 .

12. Flachbauender Gegenstand gemäß Anspruch 11, **dadurch gekennzeichnet, dass** dieser eine Stossdämpfung, ausgedrückt als kritische Fallhöhe (CFH), in einem Bereich von 1550 mm bis 2000 mm gemäß DIN EN 1177:2018, bezogen auf eine Stärke des flachbauenden Gegenstandes von 45 mm, aufweist.

13. Flachbauender Gegenstand gemäß einem oder mehreren der Ansprüche 11 oder 12, **dadurch gekennzeichnet, dass** dieser zweischichtig aufgebaut ist mit einer Basisschicht auf Grundlage der Mischung gemäß einem oder mehreren der vorhergehenden Ansprüche 1 bis 8 und einer Deckschicht, hergestellt aus einer Mischung umfassend mindestens ein EPDM, insbesondere ein EPDM-Granulat.

14. Flachbauender Gegenstand gemäß einem oder mehreren der Ansprüche 11 bis 13, **dadurch gekennzeichnet, dass** dieser frei von polyzyklischen aromatischen Kohlenwasserstoffen ist.

15. Flachbauender Gegenstand gemäß einem oder mehreren der Ansprüche 11 bis 14, **dadurch gekennzeichnet, dass** dieser als Fallschutzmatte oder als Rasengitter ausgebildet ist.
